# EUROPEAN PATENT SPECIFICATION

(11) **EP 3 540 559 B1**
(45) Date of publication and mention of the grant of the patent: **12.01.2022**
(21) Application number: 19162905.4
(22) Date of filing: 14.03.2019
(51) Int. Cl.: G06F 1/16, H04N 5/64, B64D 11/00, B60R 11/02

(54) **MONITOR GLASS PERIMETER COVER**
MONITORGLASRANDABDECKUNG
COUVERCLE DE PÉRIMÈTRE DU VERRE DE MONITEUR

(30) Priority: 14.03.2018 US 201815921209
(43) Date of publication of application: 18.09.2019
(73) Proprietor: B/E Aerospace, Inc., Winston Salem, NC 27105 (US)
(72) Inventor: THOMPSON, Jeff B., LEWISVILLE, NC North Carolina 27023 (US); BARG, Bradley D., ADVANCE, NC North Carolina 27006 (US); SIMECEK, Gregory J., WINSTON-SALEM, NC North Carolina 27101 (US)
(74) Representative: Algemeen Octrooi- en Merkenbureau B.V.

(56) References cited:
- WO-A2-2018/035544
- US-A1- 2005 146 660
- US-A1- 2015 202 999
- US-A1- 2017 024 062

## Description

### BACKGROUND

The present invention relates generally to preventing glass fragment escape from a shattered video monitor, and more particularly, to a monitor perimeter cover adapted to be bonded to frame a glass monitor screen such that a continuous outer perimeter seal is provided between the monitor perimeter cover and the glass screen to prevent glass escape in one or more of forward and lateral directions away from the monitor screen.

Aircraft are commonly equipped with video monitors for displaying information and passenger use during flight. Video monitors can be mounted to seatbacks, partitions, class dividers, deploy from overhead, etc. Seatback monitors, to which the present invention finds particular application, are within striking distance of the head of a facing passenger in the event of rapid deceleration or other emergency event. As such, the glass screen of a video monitor aboard an aircraft is required to be covered with a protective film to prevent shattered glass from releasing from the monitor and coming into contact with a passenger or crew.

Regardless of the type of screen film applied, shattered glass fragments inevitably escape out through the sides of and ultimately forward of conventional video monitor assemblies. Therefore, to meet current aircraft crash test standards, what is needed is a containment solution that prevents any released glass fragments from escaping forward and/or laterally outward away from a video monitor.

For example WO2018/035544 A2 discloses a video monitor assembly comprising a glass screen and a monitor cover. A protective film is disposed between the glass screen and the monitor cover. For example US 2005/146660 A1 relates to an LCD screen on which a bezel is adhesively bonded.

### SUMMARY

To achieve the foregoing and other aspects and advantages, in one aspect the inventive concepts disclosed herein are directed to a video monitor assembly according to claim 1.

In anotheraspect, the frame portion of the perimeter cover may be adhesively bonded to the film covering the front face of the glass screen.

In a further aspect, the film may be a PET film or a polycarbonate film.

In a further aspect, the frame portion of the perimeter cover may overlap a minimum of 2.5 mm of the outer perimeter of the front face of the glass screen, measured from a lateral extent of an edge of the front face inward, along each of the top, the bottom, the left side, and the right side of the front face of the glass screen.

In a further aspect, the perimeter cover may overlap at least one of a top, a bottom, a left side, and a right side of the video monitor to prevent glass fragment escape in a lateral direction away from the video monitor.

In a further aspect, the video monitor includes a housing having at least one lateral tab having a hole for receiving a fastener therethrough for securing the video monitor assembly to a seatback.

In a further aspect, the perimeter cover includes at least one lateral tab having a hole for receiving a fastener therethrough for securing the perimeter cover to a seatback.

In a further aspect, the perimeter cover further includes at least one opening therethrough for accessing including bit not limited to at least one of a controller and an input jack of the video monitor.

In a further aspect, the perimeter cover may be thermoformed.

In another embodiment, the inventive concepts disclosed herein are directed to a method according to claim 10.

In a further aspect, the step of bonding includes adhesive bonding.

In a further aspect, the frame portion of the perimeter cover overlaps a minimum of 2.5 mm of the outer perimeter of the front face of the glass screen, measured from a lateral extent of an edge of the front face inward, along each of the top, the bottom, the left side, and the right side of the front face of the glass screen.

In a further aspect, the perimeter cover includes at least one lateral tab having a hole for receiving a fastener therethrough for securing the perimeter cover to a seatback.

### DESCRIPTION OF THE DRAWINGS

Features, aspects and advantages of the present invention are understood when the following detailed description of the invention is read with reference to the accompanying drawings, in which:
FIG. 1 is a front perspective view of a monitor cover according to a first embodiment;
FIG. 2 is a rear perspective view of the monitor cover of FIG. 1;
FIG. 3 is a top view of the monitor cover of FIG. 1;
FIG. 4 is a bottom view of the monitor cover of FIG. 1;
FIG. 5 is a front view of the monitor cover of FIG 1;
FIG. 6 is a back view of the monitor cover of FIG. 1;
FIG. 7 is a top view of the monitor cover of FIG. 1;
FIG. 8 is a bottom view of the monitor cover of FIG. 1;
FIG. 9 is a cross-sectional view and detailed views of the monitor cover of FIG. 1 taken along line 9-9 of FIG. 5;
FIG. 10 is a front perspective view of a monitor cover according to a second embodiment;
FIG. 11 is a top perspective view of the monitor cover according to FIG. 10;
FIG. 12 is a bottom view of the monitor cover according to FIG. 10;
FIG. 13 is a top view of the monitor cover according to FIG. 10;
FIG. 14 is a front view of the monitor cover of FIG. 10;
FIG. 15 is a back view of the monitor cover of FIG. 10;
FIG. 16 is a right side view of the monitor cover of FIG. 10;
FIG. 17 is a eft side view of the monitor cover of FIG. 10;
FIG. 18 is a cross-sectional view and detailed views of the monitor cover of FIG. 10 taken along line 18-18 of FIG. 14; and
FIG. 19 is a perspective view of the monitor cover of FIG. 1 shown installed on a seatback shroud for an aircraft passenger seat.

### DETAILED DESCRIPTION

The inventive concepts disclosed herein are generally directed to a containment system for preventing glass fragments from a shattered glass screen of a video monitor from migrating or escaping at least forward of the video monitor. The containment system can further include side containment features for preventing glass fragment migration or escape in lateral directions away from the video monitor.

The containment system generally includes a perimeter cover that frames the glass screen while overlapping a predetermined minimum amount of a continuous portion around the outer perimeter of the front face of the glass screen, and while leaving uncovered the majority of the glass screen for unobstructed viewing. The perimeter cover is affixed directly to the protective film, by bonding, thereby providing a continuous outer perimeter seal on the front face between the film and perimeter cover such that any free glass fragment released from the glass screen is contained by the monitor cover.

The monitor cover can be installed by the original equipment manufacturer during video monitor manufacture, or can be applied thereafter to an existing video monitor.

The external shape of the monitor cover may vary, for example for aesthetic reasons, while at least a portion of the frame and inner geometry of the cover may correspond to the shape of the underlying video monitor to provide a tight fit engagement therewith, at least with respect to the frame and the glass.

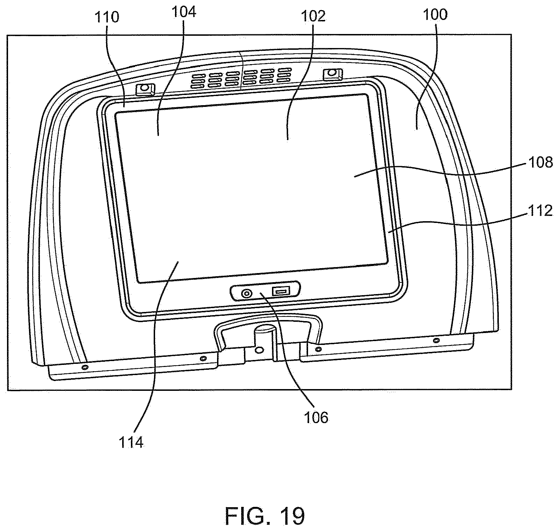

Referring now to the drawings, FIG. 19 illustrates a seatback shroud 100 configured to cover or close-out an upper portion of a seatback of an aircraft passenger seat. The shroud 100 may be made from molded plastic or other durable material. A video monitor 102 is shown generally centered with respect to the shroud 100. Centering the video monitor 102 relative to the upper seatback shroud 100 advantageously positions the video monitor 102 in an ideal and ergonomic viewing position for an aft-seated passenger, while disadvantageously positioning the video monitor 102 in a head strike area in the event of rapid deceleration.

The video monitor 102 generally includes a housing containing the electrical components, a glass screen 104, and a panel 106 containing controls and/or inputs. The front face of the glass screen 104 is covered with a protective film 108, such as a PET or polycarbonate film for abrasion resistance and/or glass fragment retention.

A perimeter cover 110, also referred to herein as a "monitor cover" or "monitor perimeter cover," is affixed to the video monitor 102, and particularly the perimeter cover 110 is affixed to at least a portion of the front face of the glass screen 104. The perimeter cover 110 may further be affixed to portions of the housing, or may tight-fit engage the housing. The perimeter cover 110 includes a frame comprising a frame portion 112 that overlaps an outer perimeter of the front face 114 of the glass screen 104 continuously along a top, a bottom, a left side, and a right side of the front face of the glass screen. As such, a continuous seal provided between the frame portion 112 of the perimeter cover 110 and the front face of the glass screen 104 to contain freed glass fragments, thus preventing glass fragment escape in at least a direction forward of the glass screen.

The frame portion 112 of the perimeter cover 110 is bonded to the film 108 covering the front face 114 of the glass screen 104 such that glass fragment migration between the inner surface of the frame portion 112 and the film is prevented. In a particular embodiment, the frame portion 112 of the perimeter cover 110 overlaps a minimum of 2.5 mm all around the outer perimeter of the front face 114 of the glass screen 104, measured from a lateral extent of an edge of the front face inward, along each of the top, the bottom, the left side, and the right side of the front face of the glass screen. In addition to the front face 114, the perimeter cover 110 may overlap at least one of a top, a bottom, a left side, and a right side of the glass screen and video monitor to prevent glass fragment escape in lateral directions away from the video monitor, thus providing a comprehensive glass fragment containment system.

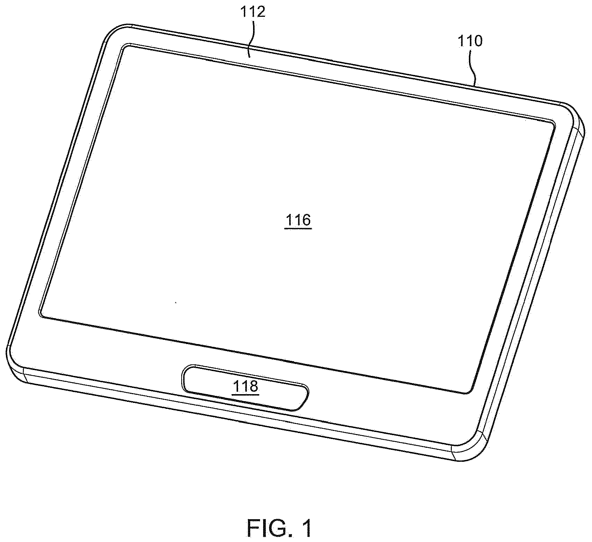

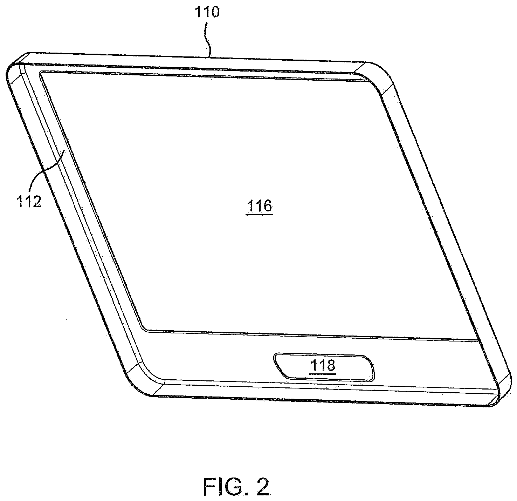

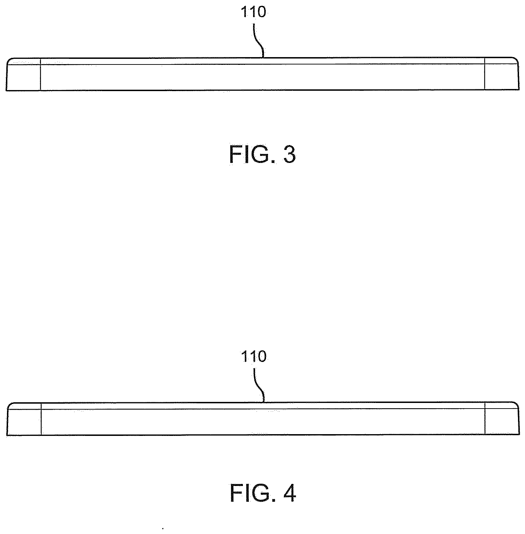

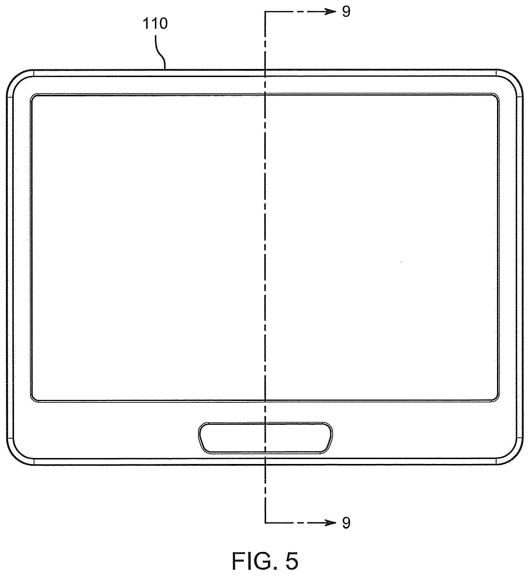

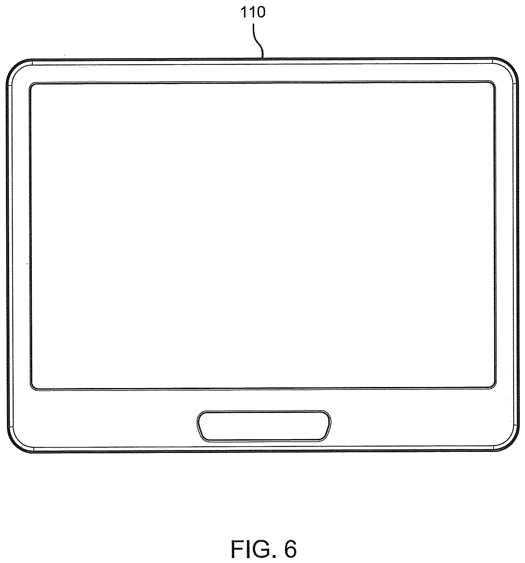

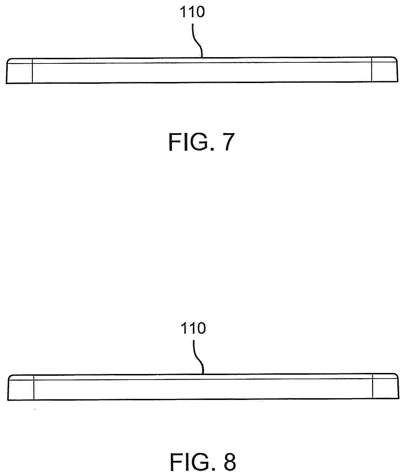

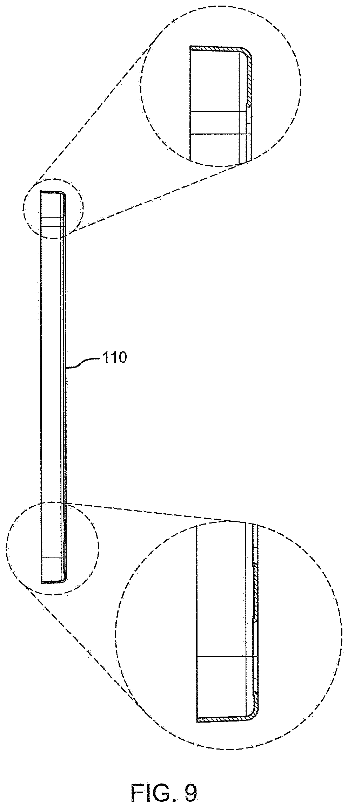

FIGS. 1-9 show various front, back, top, bottom, side and sectional views of the perimeter cover 110 shown installed in FIG. 19. The perimeter cover 110 shown includes include a first window 116 for viewing the viewable portion of the glass screen therethrough, and a second window 118 through which the panel 106 is accessed.

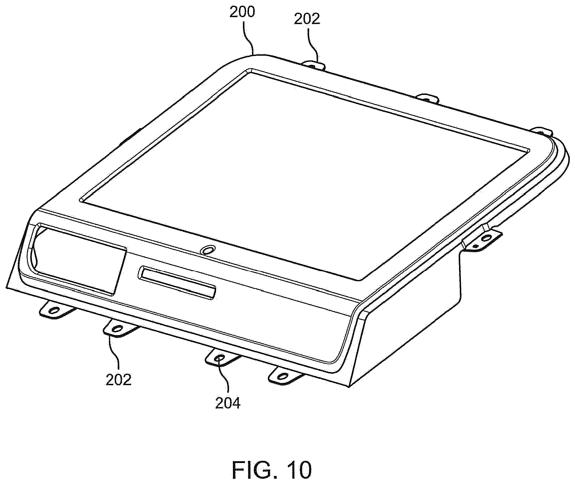

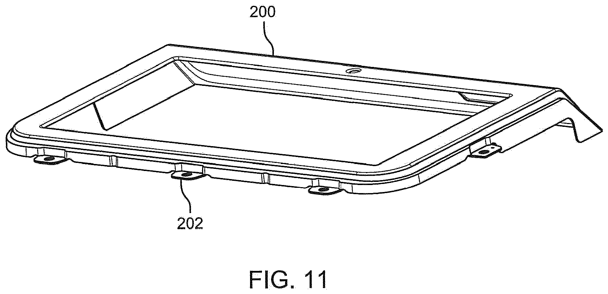

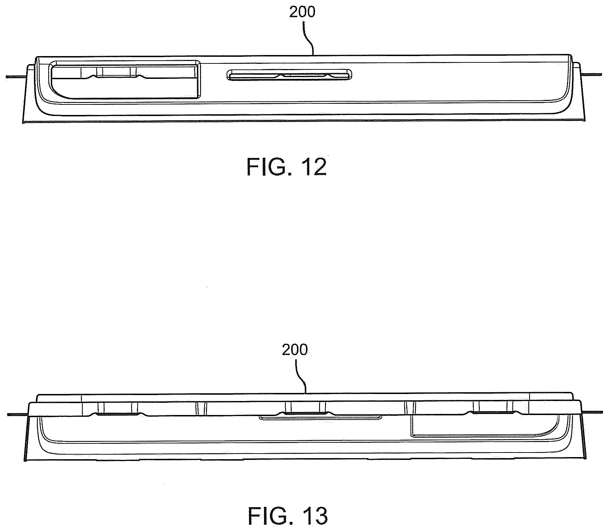

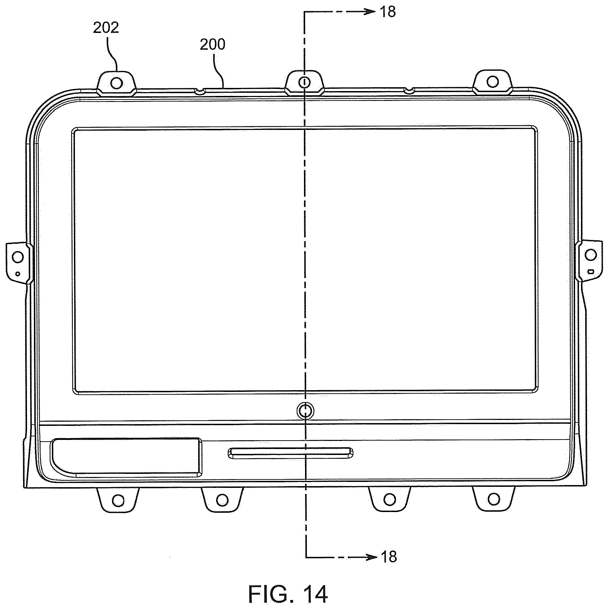

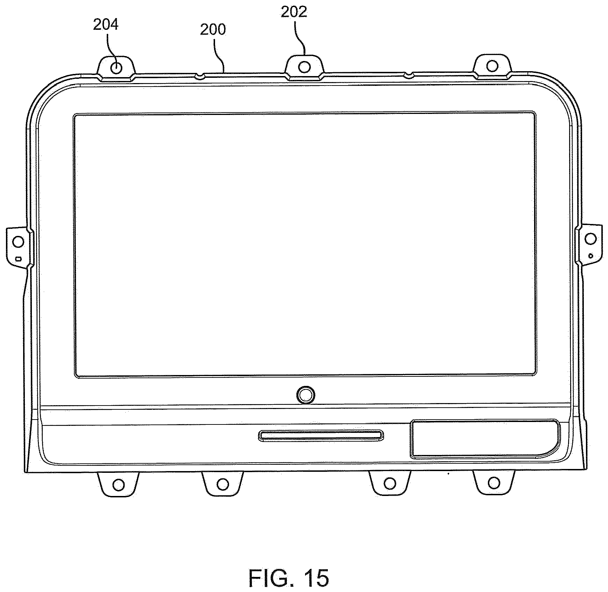

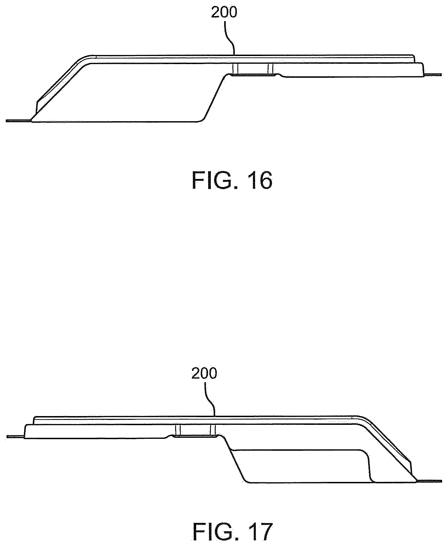

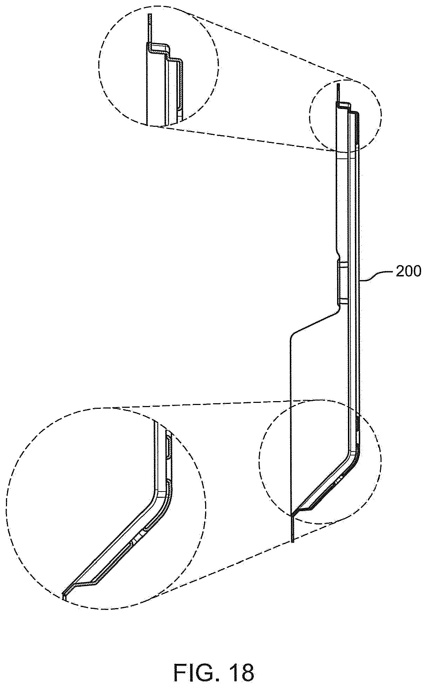

FIGS. 10-18 show various front, back, top, bottom, side and sectional views of a perimeter cover 200 according to a second embodiment. In comparison to the perimeter cover 110 according to the first embodiment, the perimeter cover 200 according to the second embodiment has a more complex shape and includes a plurality of lateral tabs 202 each having a hole 204 therethrough for receiving a fastener for securing the perimeter cover 200 to a seatback component, such as the seatback shroud or frame member. The lateral tabs 202 may serve to secure the perimeter cover 200 in place, serve to secure the perimeter cover 200 and video monitor in place, or align with like tabs of the video monitor such that a single fastener through each hole secures both the video monitor and perimeter cover in place.

The perimeter covers 110, 200 may be thermoformed or otherwise manufactured.

The inventive concepts disclosed herein are further directed to a method as defined in claim 10.

Other embodiments and configurations may be devised without departing from the scope of the appended claims.

## Claims

1. A video monitor assembly, comprising:
a video monitor (102), preferably an aircraft seatback monitor, comprising a glass screen (104) having a film (108) covering a front face (114) of the glass screen (104);
a monitor cover comprising a frame portion (112) positioned to overlap an outer perimeter of the front face (114) of the glass screen (104) continuously along a top, a bottom, a left side, and a right side of the front face (114) of the glass screen (104); and
the frame portion (112) bonded to a front face of the film (108) to provide a continuous seal between the frame portion (112) of the monitor cover (110, 200) and the front face of the film (108) to prevent glass fragment escape in a direction forward of the glass screen (104).

2. The video monitor assembly according to claim 1, wherein the frame portion (112) of the monitor cover (110, 200) is adhesively bonded to the film (108) covering the front face (114) of the glass screen (104).

3. The video monitor assembly according to claim 1 or 2, wherein the film (108) is a PET film or a polycarbonate film.

4. The video monitor assembly according to one or more of claims 1-3, wherein the frame portion (112) of the monitor cover (110, 200) is adapted to overlap, or overlaps, a minimum of 2.5 mm of the outer perimeter of the front face (114) of the glass screen (104), measured from a lateral extent of an edge of the front face (114) inward, along each of the top, the bottom, the left side, and the right side of the front face (114) of the glass screen (104).

5. The video monitor assembly according to one or more of claims 1-4, wherein the monitor cover (110, 200) is adapted to overlap, or overlaps, at least one of a top, a bottom, a left side, and a right side of the video monitor (102) to prevent glass fragment escape in a lateral direction away from the video monitor (102).

6. The video monitor assembly according to one or more of claim 1-5, wherein the video monitor (102) comprises a housing having at least one lateral tab (202) having a hole (204) for receiving a fastener therethrough for securing the video monitor assembly to a seatback.

7. The video monitor assembly according to one or more of claims 1-6, wherein the monitor cover (110, 200) comprises at least one lateral tab (202) having a hole (204) for receiving a fastener therethrough for securing the monitor cover (200) to a seatback.

8. The video monitor assembly according to one or more of claims 1-7, wherein the monitor cover (110, 200) further comprises an opening therethrough for accessing at least one of a controller and an input jack of the video monitor (102).

9. The video monitor assembly according to one or more of claim 1-8, wherein the monitor cover (110, 200) is thermoformed.

10. A method for preventing glass fragment escape in a direction forward of a glass screen (104) of an aircraft seatback video monitor (102), comprising the steps of:
providing a video monitor (102) comprising a glass screen (104);
positioning a film (108) to cover a front face (114) of the glass screen (104);
providing a monitor cover (110, 200) having a frame portion (112) adapted to overlap an outer perimeter of the front face (114) of the glass screen (104) of the video monitor (102) continuously along a top, a bottom, a left side, and a right side of the front face (114) of the glass screen (104); and
bonding the monitor cover (110, 200) to a front face of the film (108) to provide a continuous seal between the frame portion (112) of the monitor cover (110, 200) and the overlapped portion of the front face (114) of the glass screen (104).

11. The method according to claim 10, wherein the step of bonding includes adhesive bonding.

12. The method according to claim 10 or 11, wherein the frame portion (112) of the monitor cover (110, 200) overlaps less than 2.5 mm of the outer perimeter of the front face (114) of the glass screen (104), measured from a lateral extent of an edge of the front face (114) inward, along each of the top, the bottom, the left side, and the right side of the front face (114) of the glass screen (104).

13. The method according to one or more of claims 10-12, wherein the monitor cover (110, 200) comprises at least one lateral tab (202) having a hole (204) for receiving a fastener therethrough for securing the monitor cover (200) to a seatback, and/or
wherein the monitor cover (110, 200) further comprises and opening therethrough for accessing at least one of a controller and an input jack of the video monitor (102).

## Patentansprüche

1. Videomonitoranordnung, die Folgendes umfasst:
einen Videomonitor (102), vorzugsweise einen Flugzeugrückenlehnenmonitor, umfassend einen Glasbildschirm (104) mit einer Folie (108), die eine vordere Fläche (114) des Glasbildschirms (104) bedeckt;
eine Monitorabdeckung, umfassend einen Rahmenteil (112), positioniert, um einen äußeren Rand der vorderen Fläche (114) des Glasbildschirms (104) durchgehend entlang einer Oberseite, einer Unterseite, einer linken Seite und einer rechten Seite der vorderen Fläche (114) des Glasbildschirms (104) zu überlappen; und
wobei der Rahmenteil (112) mit einer vorderen Fläche der Folie (108) verbunden ist, um eine durchgehende Abdichtung zwischen dem Rahmenteil (112) der Monitorabdeckung (110, 200) und der vorderen Fläche der Folie (108) bereitzustellen, um zu verhindern, dass Glasfragmente in eine Richtung vor dem Glasbildschirm (104) entweichen.

2. Videomonitoranordnung nach Anspruch 1, wobei der Rahmenteil (112) der Monitorabdeckung (110, 200) mit der Folie (108), die die vordere Fläche (114) des Glasbildschirms (104) bedeckt, klebverbunden ist.

3. Videomonitoranordnung nach Anspruch 1 oder 2, wobei die Folie (108) eine PET-Folie oder eine Polycarbonatfolie ist.

4. Videomonitoranordnung nach einem oder mehreren der Ansprüche 1-3, wobei der Rahmenteil (112) der Monitorabdeckung (110, 200) dazu angepasst ist, mindestens 2,5 mm des äußeren Randes der vorderen Fläche (114) des Glasbildschirms (104), gemessen von einer lateralen Ausdehnung einer Kante der vorderen Fläche (114) einwärts, entlang jeder aus der Oberseite, der Unterseite, der linken Seite und der rechten Seite der vorderen Fläche (114) des Glasbildschirms (104) zu überlappen oder diese überlappt.

5. Videomonitoranordnung nach einem oder mehreren der Ansprüche 1-4, wobei die Monitorabdeckung (110, 200) dazu angepasst ist, zumindest eine aus einer Oberseite, einer Unterseite, einer linken Seite und einer rechten Seite des Videomonitors (102) zu überlappen oder diese überlappt, um zu verhindern, dass Glasfragmente in einer lateralen Richtung weg vom Videomonitor (102) entweichen.

6. Videomonitoranordnung nach einem oder mehreren der Ansprüche 1-5, wobei der Videomonitor (102) ein Gehäuse umfasst, das zumindest eine laterale Lasche (202) mit einem Loch (204) zum Aufnehmen eines Befestigungsmittels da hindurch zum Sichern der Videomonitoranordnung an einer Rückenlehne aufweist.

7. Videomonitoranordnung nach einem oder mehreren der Ansprüche 1-6, wobei die Monitorabdeckung (110, 200) zumindest eine laterale Lasche (202) mit einem Loch (204) zum Aufnehmen eines Befestigungsmittels da hindurch zum Sichern der Monitorabdeckung (200) an einer Rückenlehne umfasst.

8. Videomonitoranordnung nach einem oder mehreren der Ansprüche 1-7, wobei die Monitorabdeckung (110, 200) ferner eine Öffnung da hindurch für den Zugang zu zumindest einem aus einer Steuerung und einer Eingangsbuchse des Videomonitors (102) umfasst.

9. Videomonitoranordnung nach einem oder mehreren der Ansprüche 1-8, wobei die Monitorabdeckung (110, 200) wärmegeformt ist.

10. Verfahren zum Verhindern eines Entweichens von Glasfragmenten in eine Richtung vor einem Glasbildschirm (104) eines Flugzeugrückenlehnenvideomonitors (102), das die folgenden Schritte umfasst:
Bereitstellen eines Videomonitors (102), umfassend einen Glasbildschirm (104);
Positionieren einer Folie (108) zum Abdecken einer vorderen Fläche (114) des Glasbildschirms (104);
Bereitstellen einer Monitorabdeckung (110, 200) mit einem Rahmenteil (112), dazu angepasst, einen äußeren Rand der vorderen Fläche (114) des Glasbildschirms (104) des Videomonitors (102) durchgehend entlang einer Oberseite, einer Unterseite, einer linken Seite und einer rechten Seite der vorderen Fläche (114) des Glasbildschirms (104) zu überlappen; und
Verbinden der Monitorabdeckung (110, 200) mit einer vorderen Fläche der Folie (108) zum Bereitstellen einer durchgehenden Abdichtung zwischen dem Rahmenteil (112) der Monitorabdeckung (110, 200) und dem überlappten Teil der vorderen Fläche (114) des Glasbildschirms (104).

11. Verfahren nach Anspruch 10, wobei der Schritt des Verbindens Klebverbinden umfasst.

12. Verfahren nach Anspruch 10 oder 11, wobei der Rahmenteil (112) der Monitorabdeckung (110, 200) weniger als 2,5 mm des äußeren Randes der vorderen Fläche (114) des Glasbildschirms (104), gemessen von einer lateralen Ausdehnung einer Kante der vorderen Fläche (114) einwärts, entlang jeder aus der Oberseite, der Unterseite, der linken Seite und der rechten Seite der vorderen Fläche (114) des Glasbildschirms (104) überlappt.

13. Verfahren nach einem oder mehreren der Ansprüche 10-12, wobei die Monitorabdeckung (110, 200) zumindest eine laterale Lasche (202) mit einem Loch (204) zum Aufnehmen eines Befestigungsmittels da hindurch zum Sichern der Monitorabdeckung (200) an einer Rückenlehne umfasst, und/oder
wobei die Monitorabdeckung (110, 200) ferner eine Öffnung da hindurch für den Zugang zu zumindest einem aus einer Steuerung und einer Eingangsbuchse des Videomonitors (102) umfasst.

## Revendications

1. Ensemble moniteur vidéo, comprenant :
un moniteur vidéo (102), de préférence un moniteur de dossier de siège d'aéronef, comprenant un écran en verre (104) ayant un film (108) recouvrant une face avant (114) de l'écran en verre (104) ;
un couvercle de moniteur comprenant une partie de cadre (112) positionnée pour chevaucher un périmètre externe de la face avant (114) de l'écran en verre (104) en continu le long d'une partie supérieure, d'une partie inférieure, d'un côté gauche et d'un côté droit de la face avant (114) de l'écran en verre (104) ; et
la partie de cadre (112) étant collée à une face avant du film (108) pour fournir un joint d'étanchéité continu entre la partie de cadre (112) du couvercle de moniteur (110, 200) et la face avant du film (108) pour empêcher un fragment de verre de sortir dans une direction vers l'avant de l'écran en verre (104).

2. Ensemble moniteur vidéo selon la revendication 1, dans lequel la partie de cadre (112) du couvercle de moniteur (110, 200) est collée par adhésif au film (108) recouvrant la face avant (114) de l'écran en verre (104).

3. Ensemble moniteur vidéo selon la revendication 1 ou 2, dans lequel le film (108) est un film PET ou un film de polycarbonate.

4. Ensemble moniteur vidéo selon une ou plusieurs des revendications 1 à 3, dans lequel la partie de cadre (112) du couvercle de moniteur (110, 200) est adaptée pour chevaucher, ou chevauche un minimum de 2,5 mm du périmètre externe de la face avant (114) de l'écran en verre (104), mesuré à partir d'une étendue latérale d'un bord de la face avant (114) vers l'intérieur, le long de chacun de la partie supérieure, de la partie inférieure, du côté gauche et du côté droit de la face avant (114) de l'écran en verre (104).

5. Ensemble moniteur vidéo selon une ou plusieurs des revendications 1 à 4, dans lequel le couvercle de moniteur (110, 200) est adapté pour chevaucher, ou chevauche, au moins l'un d'une partie supérieure, d'une partie inférieure, d'un côté gauche et d'un côté droit du moniteur vidéo (102) pour empêcher un fragment de verre de sortir dans une direction latérale loin du moniteur vidéo (102).

6. Ensemble moniteur vidéo selon une ou plusieurs des revendications 1 à 5, dans lequel le moniteur vidéo (102) comprend un boîtier ayant au moins une languette latérale (202) ayant un trou (204) pour recevoir une attache à travers celui-ci pour fixer l'ensemble moniteur vidéo à un dossier de siège.

7. Ensemble moniteur vidéo selon une ou plusieurs des revendications 1 à 6, dans lequel le couvercle de moniteur (110, 200) comprend au moins une languette latérale (202) ayant un trou (204) pour recevoir une attache à travers celui-ci pour fixer le couvercle de moniteur (200) à un dossier de siège.

8. Ensemble moniteur vidéo selon une ou plusieurs des revendications 1 à 7, dans lequel le couvercle de moniteur (110, 200) comprend en outre une ouverture à travers celui-ci pour accéder à au moins l'un d'un dispositif de commande et d'une prise d'entrée du moniteur vidéo (102).

9. Ensemble moniteur vidéo selon une ou plusieurs des revendications 1 à 8, dans lequel le couvercle de moniteur (110, 200) est thermoformé.

10. Procédé pour empêcher un fragment de verre de sortir dans une direction vers l'avant d'un écran en verre (104) d'un moniteur vidéo de dossier de siège d'aéronef (102), comprenant les étapes :
de fourniture d'un moniteur vidéo (102) comprenant un écran en verre (104) ;
de positionnement d'un film (108) pour recouvrir une face avant (114) de l'écran en verre (104) ;
de fourniture d'un couvercle de moniteur (110, 200) ayant une partie de cadre (112) adaptée pour chevaucher un périmètre externe de la face avant (114) de l'écran en verre (104) du moniteur vidéo (102) en continu le long d'une partie supérieure, d'une partie inférieure, d'un côté gauche et d'un côté droit de la face avant (114) de l'écran en verre (104) ; et
de collage du couvercle de moniteur (110, 200) à une face avant du film (108) pour fournir un joint d'étanchéité continu entre la partie de cadre (112) du couvercle de moniteur (110, 200) et la partie chevauchée de la face avant (114) de l'écran en verre (104).

11. Procédé selon la revendication 10, dans lequel l'étape de collage comprend un collage par adhésif.

12. Procédé selon la revendication 10 ou 11, dans lequel la partie de cadre (112) du couvercle de moniteur (110, 200) chevauche moins de 2,5 mm du périmètre externe de la face avant (114) de l'écran en verre (104), mesuré à partir d'une étendue latérale d'un bord de la face avant (114) vers l'intérieur, le long de chacun de la partie supérieure, de la partie inférieure, du côté gauche et du côté droit de la face avant (114) de l'écran en verre (104).

13. Procédé selon une ou plusieurs des revendications 10 à 12, dans lequel le couvercle de moniteur (110, 200) comprend au moins une languette latérale (202) ayant un trou (204) pour recevoir une attache à travers celui-ci pour fixer le couvercle de moniteur (200) à un dossier de siège, et/ou
dans lequel le couvercle de moniteur (110, 200) comprend en outre une ouverture à travers celui-ci pour accéder à au moins l'un d'un dispositif de commande et d'une prise d'entrée du moniteur vidéo (102).
